(19) Europäisches Patentamt
European Patent Office
Office européen des brevets

(11) **EP 1 099 577 B1**

(12) **EUROPEAN PATENT SPECIFICATION**

(45) Date of publication and mention
of the grant of the patent:
**15.09.2004 Bulletin 2004/38**

(51) Int Cl.⁷: $B60G\ 21/06$, $B60G\ 17/056$

(21) Application number: **00124759.2**

(22) Date of filing: **13.11.2000**

(54) **Vehicle suspension system**

Radaufhängungssystem für ein Fahrzeug

Système de suspension de véhicule

(84) Designated Contracting States:
**AT BE CH CY DE DK ES FI FR GB GR IE IT LI LU MC NL PT SE TR**

(30) Priority: **11.11.1999 JP 32086499**
**12.01.2000 JP 2000003385**

(43) Date of publication of application:
**16.05.2001 Bulletin 2001/20**

(73) Proprietor: **YAMAHA HATSUDOKI KABUSHIKI KAISHA**
**Iwata-shi Shizuoka-ken, 438 (JP)**

(72) Inventor: **Sakai, Kouji**
**Iwata-shi, Shizuoka-ken 438 (JP)**

(74) Representative: **Grünecker, Kinkeldey, Stockmair & Schwanhäusser Anwaltssozietät**
**Maximilianstrasse 58**
**80538 München (DE)**

(56) References cited:
**EP-A- 0 855 296          EP-A- 0 980 774**
**DE-A- 3 426 734          DE-U- 9 415 009**
**US-A- 4 295 660**

• **PATENT ABSTRACTS OF JAPAN vol. 1996, no. 09, 30 September 1996 (1996-09-30) & JP 08 132846 A (YAMAHA MOTOR CO LTD), 28 May 1996 (1996-05-28)**

**Description**

This invention relates to a vehicle suspension system especially for use in automobiles.

A generic type of vehicle suspension is disclosed in US-A-4 295 660.

An example of this type of vehicle suspension system is disclosed in a Japanese laid-open patent application JP-A-08-132846 and is constituted as shown in FIG. 5.

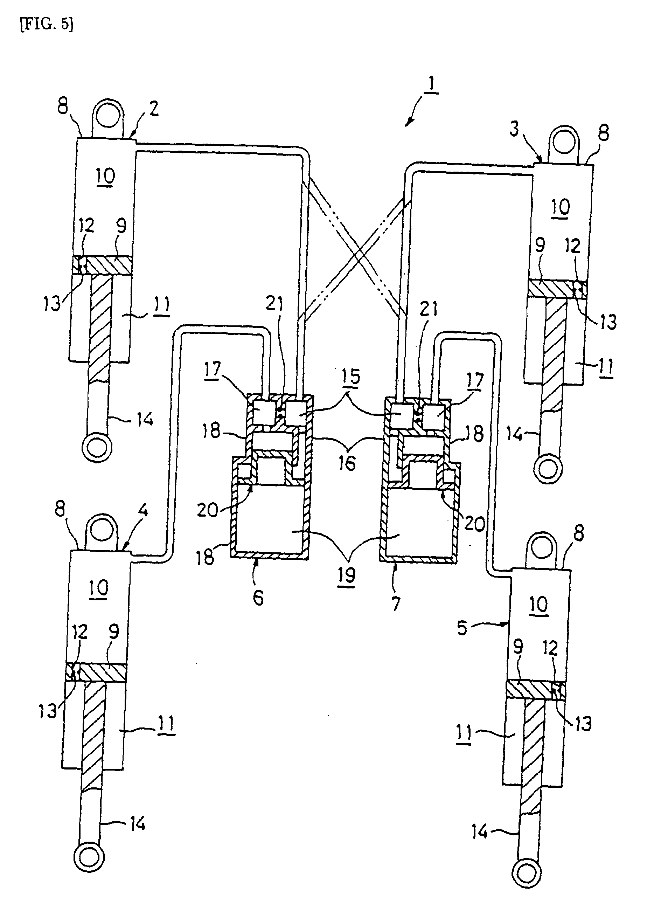

FIG. 5 is a cross-sectional view showing the constitution of a conventional vehicle suspension system. The conventional suspension system 1 shown in FIG. 5 is for use in four-wheeled vehicles, and comprises: hydraulic cylinders (oil dampers) 2, 3, 4, and 5 respectively for the left front, right front, left rear, and right rear wheels, and left side and right side pressure regulators 6 and 7.

The four hydraulic cylinders 2 to 5 have an identical constitution with the interior of a cylinder body 8 filled with working oil and divided with a piston part 9 into an upper and a lower oil chambers 10 and 11. The piston part 9 is bored with a communication passage 12 making fluid communication between the upper and the lower oil chambers 10 and 11. A throttle 13 is interposed in the communication passage 12.

These hydraulic cylinders 2 to 5 are interposed between a vehicle body side (not shown) and a wheel side (not shown) by connecting the cylinder bodies 8 to the vehicle body side and by pivoting the lower ends of the piston rods 14 to components such as links that move up and down together with wheels relative to the vehicle body.

The left and right pressure regulators 6 and 7 are also made in an identical constitution. Each of the pressure regulators 6 and 7 is constituted by forming two cylinders, a first and a second pressure regulating cylinders 16 and 18, in a single body. The first cylinder 16 has a first oil chamber 15 connected to the upper oil chamber 10 of a hydraulic cylinder 2 or 3 for the left or right front wheel. The second pressure regulating cylinder 18 has a second oil chamber 17 connected to the upper oil chamber 10 of a hydraulic cylinder 4 or 5 for the left or right rear wheel. The oil chambers 15, 17, and a high pressure gas chamber 19 are defined with a free piston 20. A throttle 21 is interposed between the first and the second oil chambers 15 and 17. The free piston 20 is formed so that the first oil chamber 15 has the same effective cross-sectional area as that of the second oil chamber 17.

The conventional suspension system 1 constituted as described above produces damping forces with only the throttles 13 of the piston parts 9 when the hydraulic cylinders 2, 3 for the front wheels and the hydraulic cylinders 4, 5 for the rear wheels work in the same direction with an approximately the same operation amount. When the hydraulic cylinders 2, 3 for the front wheels operate in a different direction to that of the hydraulic cylinders 4, 5 for the rear wheels, damping forces are produced also with the throttles 21, 21 of the pressure regulators 6 and 7. As a result, damping forces relatively decrease when the vehicle makes a turn, while damping forces relatively increase when the vehicle makes a panic start or a rapid acceleration.

Also in the prior art, it is arranged in some cases as shown with the phantom lines in FIG. 5, in which the hydraulic cylinder 2 for the left front wheel and the hydraulic cylinder 5 for the right rear wheel are connected to the right side pressure regulator 7, and the hydraulic cylinder 3 for the right front wheel and the hydraulic cylinder 4 for the left rear wheel are connected to the left side pressure regulator 6. When this constitution is employed, the damping forces relatively increase when the vehicle rolls or pitches, and the damping forces relatively decrease when the vehicle bounces.

The conventional vehicle suspension system 1 constituted as described above, however, must be constituted that every dimension of the hydraulic cylinders 2 to 5, the regulators 6, 7, and the lever ratios of the suspension system (the ratios of the vertical displacements of the wheels to the amounts of the hydraulic cylinder travels) are the same between the front and the rear wheels. This makes it impossible to arrange the suspension systems for the front and the rear wheels to adapt for example to the vehicle weight distribution and raises the problem of reduced degree of freedom in designing the front and the rear suspension systems.

Such a problem can be lessened to some extent by mutually changing the constitutions of the front and the rear suspension systems. However, in order to change the constitutions, it must be arranged that the damping forces produced through the throttles do not change between the two cases; one in which the front wheel hydraulic cylinders are compressed while the rear wheel hydraulic cylinders are extended, and the other in which the front wheel hydraulic cylinders are extended while the rear wheel hydraulic cylinders are compressed.

It is an objective of the present invention to provide a vehicle suspension system having an improved suspension property.

According to the present invention this objective is solved by a vehicle suspension system according to claim 1.

Preferably, in the vehicle suspension system the values of a1, a2, S1, S2, $\lambda$1, and $\lambda$2 being set to satisfy the conditions a1 $\neq$ a2 and S1/$\lambda$1 $\neq$ S2/$\lambda$2.

Preferably, in the vehicle suspension system the values of a1, a2, S1, S2, $\lambda$1, and $\lambda$2 being set to satisfy the conditions a1 = a2 and S1/$\lambda$1 $\neq$ S2/$\lambda$2 so that the first and the second pressure regulating cylinders (16,18) are constituted to satisfy an equation:

$$(S1/\lambda 1)\ /A1 = (S2/\lambda 2)/A2,$$

Preferably in the vehicle suspension system the values of a1, a2, S1, S2, $\lambda 1$, and $\lambda 2$ being set to satisfy the conditions a1 $\neq$ a2 and S1/$\lambda 1$ = S2/$\lambda 2$ so that the first and the second hydraulic cylinders (2,4), and the first and the second pressure regulating cylinders (16,18) are constituted to satisfy an equation: (a1/A1) = (a2/A2).

Preferred embodiments of the present invention are laid down in the dependent claims.

Advantageously, the vehicle suspension system makes it possible to constitute a front wheel and a rear wheel suspension systems respectively with different specifications while retaining the function of relatively increasing and decreasing the damping forces according to the behavior of the vehicle.

Accordingly, the vehicle suspension system is constituted with suspension systems, a first and a second hydraulic cylinders, and a first and a second pressure regulating cylinders to satisfy a condition (S1/$\lambda 1$) x (a1/A1) = (S2/$\lambda 2$ ) x (a2/A2)
on the assumption that;
S1 and S2 denote piston travels of the first and the second hydraulic cylinders,
a1 and a2 denote effective cross-sectional areas of pistons of the first and the second hydraulic cylinders,
$\lambda 1$ and $\lambda 2$ denote vertical displacement amounts at ground contact points of wheels caused by the piston travels S1 and S2 of the first and the second hydraulic cylinders, and
A1 and A2 denote effective cross-sectional areas of the first and the second pressure regulating cylinders,
with values a1 and a2 of cross-sectional areas of piston rods of the first and the second hydraulic cylinders being set to mutually different values, with lever ratios S1/$\lambda 1$ and S2/$\lambda 2$ of the suspension systems being set to mutually different values, and with a1, a2, S1, S2, $\lambda 1$, and $\lambda 2$ being set under at least one of conditions a1 $\neq$ a2 and S1/$\lambda 1$ = S2/$\lambda 2$.

With regard thereto, the working oil is prevented from flowing through the throttles when two wheels move in the same direction by about the same travel, even in the cases of the effective cross-sectional areas a1 and a2 of the pistons of the first and the second hydraulic cylinders being mutually different, and the ratios of the piston travels of the first and the second hydraulic cylinder to the displacement amounts $\lambda 1$ and $\lambda 2$ of the wheels, or the lever ratios 1/$\lambda 1$ and S2/$\lambda 2$ being mutually different.

Preferably, the vehicle suspension system is constituted with suspension systems, a first and a second hydraulic cylinders, a first and a second pressure regulating cylinders, and throttles are constituted to satisfy an equation

$$(S1/\lambda 1)\ x\ (a1/A1)\ x\ \Delta\Phi = (S2/\lambda 2)\ x\ (a2/A2)\ x\ \Delta\Phi'$$

on the assumption that;
S1 and S2 denote piston travels of the first and the second hydraulic cylinders,
a1 and a2 denote effective cross-sectional areas of pistons of the first and the second hydraulic cylinders,
$\lambda 1$ and $\lambda 2$ denote vertical displacement amounts at ground contact points of wheels caused by the piston travels S1 and S2 of the first and the second hydraulic cylinders,
A1 and A2 denote effective cross-sectional areas of the first and the second pressure regulating cylinders,
P1 and P2 denote pressures in oil chambers of the first and the second pressure regulating cylinders,
$\Delta\Phi$ denotes the differential pressure when working oil flows from the first oil chamber to the second oil chamber, and
$\Delta\Phi'$ denotes the differential pressure when working oil flows from the second oil chamber to the first oil chamber,
on conditions that,
of the respective paired values of; a1 and a2, S1/$\lambda 1$ and S2/$\lambda 2$, or the damping characteristics when the working oil flows from the hydraulic route of the first hydraulic cylinder through the throttle to the hydraulic route of the second hydraulic cylinder, and the damping characteristics when the working oil flows from the hydraulic route of the second hydraulic cylinder through the throttle to the hydraulic route of the first hydraulic cylinder, at least one pair of values are set to mutually different values, and when
paired wheels move in mutually opposite directions with the same absolute values of moving speed.

With regard thereto, the damping characteristics of the throttles are prevented from changing depending on the direction of working oil flow even in at least one of the cases of; the cross-sectional areas a1 and a2 of the piston rods of the first and second hydraulic cylinders being mutually different, the lever ratios S1/$\lambda 1$ and S2/$\lambda 2$ being mutually different, and the effective cross-sectional areas A1 and A2 of the first and the second pressure regulating cylinders being mutually different.

Preferably, the vehicle suspension system is constituted with suspension system, a first and a second hydraulic cylinders, a first and a second pressure regulating cylinders, and throttles are constituted to satisfy an equation

$$(S1/\lambda 1) \times (a1/A1) \times \Delta\ \Phi/W1 = (S2/\lambda 2) \times (a2/A2) \times \Delta\Phi'/W2$$

on the assumption that;

S1 and S2 denote piston travels of the first and the second hydraulic cylinders,

a1 and a2 denote effective cross-sectional areas of pistons of the first and the second hydraulic cylinders,

$\lambda$1 and $\lambda$2 denote vertical displacement amounts at ground contact points of wheels caused by the piston travels S1 and S2 of the first and the second hydraulic cylinders,

W1 and W2 denote static ground contact loads of the wheels on the first and the second hydraulic cylinder sides,

A1 and A2 denote effective cross-sectional areas of the first and the second pressure regulating cylinders,

P1 and P2 denote pressures in oil chambers of the first and the second pressure regulating cylinders,

$\Delta\ \Phi$ denotes the differential pressure when working oil flows from the first oil chamber to the second oil chamber, and

$\Delta\ \Phi'$ denotes the differential pressure when working oil flows from the second oil chamber to the first oil chamber,

on conditions that,

of the respective paired values of; a1 and a2, W1 and W2, S1/$\lambda$1 and S2/$\lambda$12, or the damping characteristics when the working oil flows from the hydraulic route of the first hydraulic cylinder through the throttle to the hydraulic route of the second hydraulic cylinder, and the damping characteristics when the working oil flows from the hydraulic route of the second hydraulic cylinder through the throttle to the hydraulic route of the first hydraulic cylinder, at least one pair of values are set to mutually different values, and when paired wheels move in mutually opposite directions with the same absolute values of moving speed.

With regard thereto, the damping characteristics of the throttles are prevented from changing depending on the direction of working oil flow even in at least one of the cases of; the cross-sectional areas a1 and a2 of the piston rods of the first and second hydraulic cylinders being mutually different, the static ground contact loads W1 and W2 of the wheels on the first and the second hydraulic cylinder sides being mutually different, the lever ratios S1/$\lambda$1 and S2/$\lambda$2 being mutually different, and the effective cross-sectional areas A1 and A2 of the first and the second pressure regulating cylinders being mutually different.

Hereinafter the present invention is illustrated and explained by means of preferred embodiments in conjunction with the accompanying drawings. In the drawings wherein:

FIG. 1 is a cross-sectional view showing the constitution of a vehicle suspension system according to the embodiment;

FIG. 2 is a graph for use in setting the throttles;

FIG. 3 shows an example of another constitution of the pressure regulator;

FIG. 4 shows an example of still another constitution of the pressure regulator; and

FIG. 5 is a cross-sectional view showing the constitution of a conventional vehicle suspension system.

(First Embodiment)

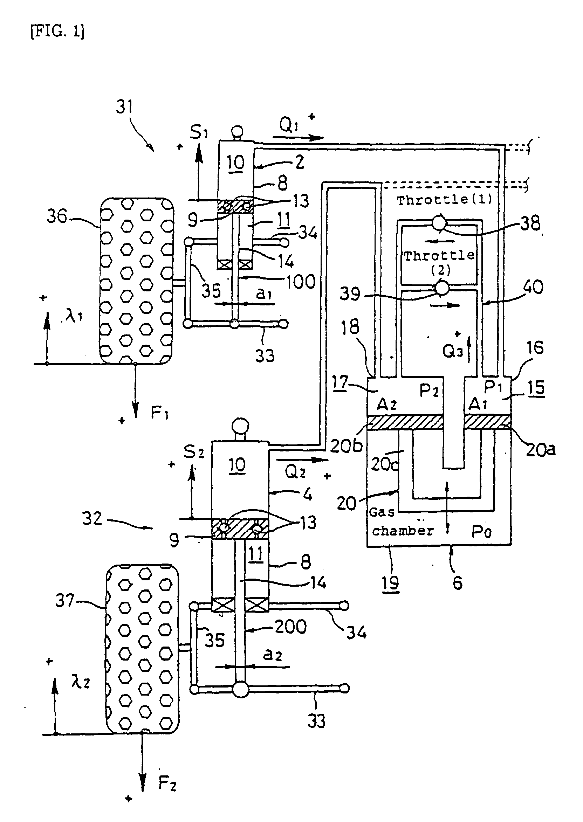

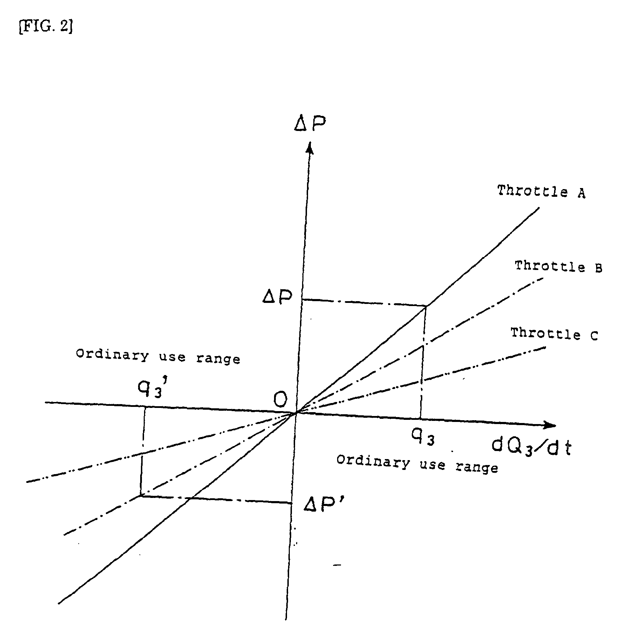

The details of a first embodiment will be hereinafter described in reference to FIGs. 1 and 2.

FIG. 1 is a cross-sectional view showing the constitution of a vehicle suspension system according to the embodiment. FIG. 2 is a graph for use in setting the throttles. In these figures, components the same as or similar to those described in reference to FIG. 5 are provided with the same symbols and their detailed descriptions are omitted. Here, the embodiment will be described as applied to the front wheel and the rear wheel suspension systems on the left side of a four-wheeled vehicle. The front wheel and the rear wheel suspension systems on the other, right side of the vehicle are constituted the same as those shown in FIG. 1.

A front suspension system 31 and a rear suspension system 32 shown in FIG. 1 are constituted as follows: The one side ends (the right side ends in FIG. 1) of a lower arm 33 and an upper arm 34 are respectively pivoted to a vehicle body. A knuckle 35 supporting a front wheel 36 or a rear wheel 37 for free rotation interconnects the other side ends of the lower and the upper arms 33 and 34. A hydraulic cylinder (hydraulic damper) 2 or 4 is interposed between an intermediate point on the lower arm 33 and the vehicle body. Dimensions of components of the front suspension system 31 and the rear suspension system 32 of this embodiment are set adapt to the vehicle weight distribution. The hydraulic cylinder 2 or 4 comprises a piston 100 or 200 comprising a piston part 9 and a piston rod 14. The piston 100 or 200 is inserted for reciprocal movement in a cylinder body 8. The lower end of the piston rod 14 is connected to the lower arm 33 or 34, while the cylinder body 8 is connected to the vehicle body.

The size of the hydraulic cylinder 8 used in the front suspension system 31 is smaller than the size of the hydraulic cylinder 8 used in the rear suspension system 32. That is to say, the effective cross-sectional area a1 of the piston 100 in the hydraulic cylinder 2 for the front wheel is set to be different from the effective cross-sectional area a2 of the piston 200 in the hydraulic cylinder 4 for the rear wheel. The term "effective cross-sectional area" as used herein refers to the cross-sectional area of the portion that affects the amount of the working oil that flows into or out of the hydraulic cylinders 2 and 4. In this embodiment, it refers to the cross-sectional area of the piston rod 14. Also, the front wheel suspension system 31 and the rear wheel suspension system 32 are set to be mutually different in the ratio of the wheel travel and the piston travel between the hydraulic cylinders 2 and 4. To put it more in detail, assuming the vertical displacement at the ground contact point of the front wheel 36 to be $\lambda 1$ as the piston of the hydraulic cylinder 2 for the front wheel 2 travels by a displacement S1 and the vertical displacement at the ground contact point of the rear wheel 37 to be $\lambda 2$ as the piston of the hydraulic cylinder 4 for the rear wheel 4 travels by a displacement S2, the lever ratio (S1/$\lambda 1$) of the front wheel suspension system 31 is set to be different from the lever ratio (S2/$\lambda 2$) of the rear wheel suspension system 32. The hydraulic cylinder 2 for the front wheel corresponds to the first hydraulic cylinder of this invention, and the hydraulic cylinder 4 for the rear wheel corresponds to the second hydraulic cylinder of this invention.

The left side pressure regulator 6 is constituted with different effective cross-sectional areas A1 and A2 of a first and a second pressure regulating cylinders 16 and 18, respectively connected to the front wheel suspension system 31 and the rear wheel suspension system 32. The oil pressure in the (first) oil chamber 15 of the first pressure regulating cylinders 16 is denoted as P1, the oil pressure in the (second) oil chamber 17 of the second pressure regulating cylinders 18 is denoted as P2, and the pressure in the high pressure gas chamber 19 is denoted as P0. The first oil chamber 15 and the second oil chamber 17 are interconnected through a communication passage 40 having a first and a second throttles 38 and 39 interposed in the middle of the passage. The first throttle 38 is constituted to permit the working oil to flow only from the first oil chamber 15 to the second oil chamber 17 and to produce a damping force as the working oil flows through it. The second throttle 39 is constituted to permit the working oil to flow only from the second oil chamber 17 to the first oil chamber 15 and to produce a damping force as the working oil flows through it. The first and the second throttles 38 and 39 are also set to have different damping force characteristics. A free piston 20 comprises a piston 20a in the first pressure regulating cylinder 16 and a piston 20b in the second pressure regulating cylinder 18, with the pistons 20a and 20b interconnected through a connecting rod 20c. The pistons 20a and 20b correspond to the movable partition wall of the invention.

Simply changing the constitutions of the suspension systems and the hydraulic systems for the front wheels from those for the rear wheels does not result in agreement in the working oil delivery amounts Q1 and Q2 from the hydraulic cylinders 2 and 4 of the front and the rear suspension systems 31 and 32 when the hydraulic cylinders 2 and 4 simultaneously contract by the same amount. This invites an undesirable result of the working oil flowing between the first and the second pressure regulating cylinders 16 and 18 through the first or the second throttle 38 or 39, producing an unnecessary damping force.

The inventor has found out that the unnecessary damping force is prevented from being produced by constituting the suspension systems and the hydraulic systems to satisfy the following equation (1):

$$(S1/\lambda 1) \times (a1/A1) = (S2/\lambda 2) \times (a2/A2) \tag{1}$$

That is to say, the suspension systems and the hydraulic systems are constituted so that the product of the lever ratio of the front suspension system and the ratio of the effective cross-sectional areas of the pressure regulating cylinder 16 to the piston rod 14 of the front suspension system is approximately the same as the product of the lever ratio of the rear suspension system and the ratio of the effective cross-sectional areas of the pressure regulating cylinder 18 to the piston rod 14 of the rear suspension system. Employing the above constitution makes it possible to prevent the unnecessary damping force from being produced as the working oil is prevented from flowing through the first and the second throttles 38 and 39 when the displacement directions and the displacement amounts of the front and the rear wheels 36 and 37 are approximately the same each other even in the case the cross-sectional areas a1 and a2 of the piston rods 14 and 14 of the hydraulic cylinder 2 for the front wheel and of the hydraulic cylinder 4 for the rear wheel are different from each other, or in the case the ratios of the piston travels S1 and S2 of the hydraulic cylinders 2 and 4 to the displacement amounts $\lambda 1$ and $\lambda 2$ of the front and the rear wheels are mutually different.

When the hydraulic cylinder 2 for the front wheel is contracted and the hydraulic cylinder 4 for the rear wheel is extended (as in a panic braking) or on the contrary when the hydraulic cylinder 2 is extended and the hydraulic cylinder 4 is contracted (as in a rapid acceleration), damping forces are produced as the working oil flows through the first and the second throttles 38 and 39. Unless the damping force in the rapid braking is approximately same as the damping force in the rapid acceleration, vertical movement of the vehicle body cannot be controlled appropriately. The inventor has proved that the appropriate control can be realized when the suspension systems and the hydraulic systems (including the first and the second throttles 38 and 39) are constituted to satisfy the following equation (2) when the vehicle body pitches, with the front wheel 36 and the rear wheel 37 displacing in mutually opposite directions by the same displacing speed in absolute value (with $d\lambda 1/dt = -d\lambda 2/dt$).

$$(S1/\lambda 1) \times (a1/A1) \times \Delta\Phi = - (S2/\lambda 2) \times (a2/A2) \times \Delta\Phi' \qquad (2)$$

In the equation (2), $\Delta\Phi$ denotes the differential pressure (P1 - P2) between the oil chambers 15 and 17 when the working oil flows from the first pressure regulating cylinder 16 to the second pressure regulating cylinder 18, and $\Delta\Phi'$ denotes the differential pressure (P1 - P2) between the oil chambers 15 and 17 when the working oil flows from the second pressure regulating cylinder 18 to the first pressure regulating cylinder 16.

The above equation (2) is derived by: obtaining a first condition under which the damping force produced through the first throttle 38 during rapid deceleration is equal to the damping force produced through the second throttle 39 during rapid acceleration, obtaining a second condition under which the damping force produced through the second throttle 39 during rapid deceleration is equal to the damping force produced through the first throttle 38 during rapid acceleration, and arranging that the two condition are simultaneously satisfied. The process of deriving the equation (2) is described below.

When deriving the equation (2), it is assumed that the vertical displacement speeds of the wheels at the ground contact points are the same in absolute value and opposite in direction (with $d\lambda 1/dt = - d\lambda 2/dt$).

(a) When it is assumed that F1 is the damping force produced through the first throttle 38 and F2 is the damping force produced through the second throttle 39 in the case the front wheel 36 moves up relative to the vehicle body and the rear wheel 37 moves down relative to the vehicle body during a rapid deceleration for example, namely in the case $\lambda 1/dt > 0$, $\lambda 2/dt < 0$, the damping force F1 can be expressed with the equation ① below, the damping force F2 can be expressed with the equation ② below, the differential pressure through the pressure regulator 6 can be expressed with the equation ③, and the oil pressure working on the free piston 20 of the pressure regulator 6 can be expressed with the equation ④.

$$F1(\lambda 1/dt > 0, \lambda 2/dt < 0) = a1 \times (P1 - P0) \times S1/\lambda 1 \qquad ①$$

$$F2(\lambda 1/dt > 0, \lambda 2/dt < 0) = a2 \times (P2 - P0) \times S2/\lambda 2 \qquad ②$$

$$P1 - P2 = \Delta P \qquad ③$$

$$P1 \times A1 + P2 \times A2 = P0 \times (A1 + A2) \qquad ④$$

From the above equations ①, ② and ④,

$$F1(\lambda 1/dt > 0, \lambda 2/dt < 0) = a1 \times \Delta P \times A2 \times (S1/\lambda 1) / (A1 + A2) \qquad ⑤$$

From the above equations ②, ③, and ④,

$$F2(\lambda 1/dt > 0, \lambda 2/dt < 0) = -a2 \times \Delta P \times A1 \times (S2/\lambda 2)/(A1 + A2) \qquad ⑥$$

(b) When it is assumed that F1' is the damping force produced through the first throttle 38 and F2' is the damping force produced through the second throttle 39 in the case the front wheel 36 moves down relative to the vehicle body and the rear wheel 37 moves up relative to the vehicle body as during a rapid acceleration, namely in the case $\lambda 1/dt < 0$, $\lambda 2/dt > 0$, the damping force F1' can be expressed with the equation ①' below, the damping force F2' can be expressed with the equation ②' below, the differential pressure through the pressure regulator 6 can be expressed with the equation ③', and the oil pressure working on the free piston 20 of the pressure regulator 6 can be expressed with the equation ④'.

$$F1'(\lambda1/dt < 0, \lambda2/dt > 0) = a1 \times (P1' - P0) \times S1/\lambda1 \qquad \textcircled{1}\,'$$

$$F2'(\lambda1/dt < 0, \lambda2/dt > 0) = a2 \times (P2' - P0) \times S2/\lambda2 \qquad \textcircled{2}\,'$$

$$P1' - P2' = \Delta P' \qquad \textcircled{3}\,'$$

$$P1' \times A1 + P2' \times A2 = P0 \times (A1 + A2) \qquad \textcircled{4}\,'$$

From the above equations $\textcircled{1}\,'$, $\textcircled{2}\,'$, and $\textcircled{4}\,'$,

$$F1'(\lambda1/dt < 0, \lambda2/dt > 0) = a1 \times \Delta P' \times A2 \times (S1/\lambda1) / (A1 + A2) \qquad \textcircled{5}\,'$$

From the above equations $\textcircled{2}\,'$, $\textcircled{3}\,'$, and $\textcircled{4}\,'$,

$$F2'(\lambda1/dt < 0, \lambda2/dt > 0) = -a2 \times \Delta P' \times A1 \times (S2/\lambda2) / (A1 + A2) \qquad \textcircled{6}\,'$$

The above-mentioned first condition under which the damping force F1 produced through the first throttle 38 during rapid deceleration is equal to the damping force F2' produced through the second throttle 39 during rapid acceleration is that the equation $\textcircled{5}$ is equal to $\textcircled{6}\,'$, namely;
since F1($\lambda1/dt > 0$, $\lambda2/dt < 0$) = F2'($\lambda1/dt < 0$, $\lambda2/dt > 0$), it is expressed with the equation $\textcircled{7}\,'$ below:

$$(a1/A1) \times (S1/\lambda1) \times \Delta P = -(a2/A2) \times (S2/\lambda2) \times \Delta P' \qquad \textcircled{7}\,'$$

The second condition under which the damping force F2 produced through the second throttle 39 during rapid deceleration is equal to the damping force F1' produced through the first throttle 39 during rapid acceleration is that the equation $\textcircled{6}$ is equal to $\textcircled{5}\,'$, namely;
since F2($\lambda1/dt > 0$, $\lambda2/dt < 0$) = F1'($\lambda1/dt < 0$, $\lambda2/dt > 0$), it is expressed with the equation $\textcircled{8}$ below:

$$(a1/A1) \times (S1/\lambda1) \times \Delta P' = -(a2/A2) \times (S2/\lambda2) \times \Delta P \qquad \textcircled{8}$$

Since the difference between the equations $\textcircled{7}$ and $\textcircled{8}$ is between $\Delta P$ and $\Delta P'$, which are the differential pressures between the pressure P1 in the first pressure regulating cylinder and the pressure P2 in the second pressure regulating cylinder, $\Delta P$ and $\Delta P'$, or $\Delta P'$ and $\Delta P$, may be replaced with $\Delta\Phi$ and $\Delta\Phi'$ for convenience' sake. In this way, the above equation (2) is obtained.
The damping force characteristics of the first and the second throttles 38 and 39 are obtained on the basis of the working oil flow rates through the hydraulic systems respectively connected to the hydraulic cylinders 2 and 4 for the front and the rear wheels. That is to say, since the equation (3) below is effective in the vehicle suspension system of this embodiment, they are obtained by the use of the equation:

$$(dQ1/dt - dQ3/dt) / A1 = (dQ2/dt - dQ3/dt) / A2 \qquad (3)$$

The equation (3) can be simplified into the equation (4) below:

$$dQ3/dt = (A2 \times dQ1/dt - A1 \times dQ2/dt) / (A1 + A2) \qquad (4)$$

The damping force characteristics of the first and the second throttles 38 and 39 are obtained by applying the values of dQ3/dt obtained with the equation (4) to the graph of FIG. 2.
FIG. 2 is a graph of damping force characteristics obtained by experiments of three types of existing throttles A, B, and C, respectively represented with a solid line, a dash-and-dotted line, and a dash-and-double-dotted line, with the horizontal axis representing the value of dQ3/dt and the vertical axis indicating the value of change AP in the oil pressure. In this embodiment, the value of Q3 obtained with the equation (4) is plotted on FIG. 2 and an appropriate throttle is chosen from the three existing throttles A through C. Here will be described the procedure of choosing the throttle.

The values A1 and A2 on the right side of the equation (4) are determined once the pressure regulator 6 is formed. The values dQ1/dt and dQ2/dt are determined once the specifications of the hydraulic cylinders 2 and 4 for the front and the rear wheels and the lever ratios of the front and the rear suspension systems 31 and 32 are determined. Therefore, the dQ3/dt can be obtained from the equation (4). The value dQ3/dt is set for example to a value for ordinary running of an ordinary automobile, namely a value for ordinary range of use. Next, the value Q3 is calculated by specifying a time to the value dQ3/dt. The value Q3 is obtained to correspond to each of the working directions of the hydraulic cylinders 2 and 4. The values Q3 corresponding to the working directions are indicated as q3 and q3' in FIG. 2.

On the other hand, the value $\Delta P$ in FIG. 2 is obtained from the equation (2) above. The equation (2) can be expressed as the ratio of $\Delta \Phi$ to $\Delta \Phi'$. That is, since $S1/\lambda1$ and a1/A1 on the left side and $S2/\lambda2$ and a2/A2 on the right side of the equation (2) are determined by determining the specifications of the hydraulic cylinders 2 and 4 for the front and the rear wheels and the pressure regulator 6, and can be respectively obtained by calculation, assuming K1 to be the calculation result of the left aide and K2 to be that of the right side, the equation (2) can be written in a different form as K1 x $\Delta \Phi$ = K2 x $\Delta \Phi'$. The value $\Delta \Phi$ can be replaced with $\Delta P$, and $\Delta \Phi'$ can be replaced with $\Delta \Phi P'$. Next in FIG. 2, assuming that the throttle A is used in the ordinary use range q3, $\Delta P$ is calculated and put into the transformed equation (2) above to obtain $\Delta P'$. By applying the $\Delta P'$ to FIG. 2, a throttle is chosen that can provide the ordinary use range q3. In this embodiment, the throttle A is chosen as the first throttle 38 and throttle B is chosen as the second throttle 39.

As described above, in the vehicle suspension system 1 of this embodiment, the suspension systems 31 and 32, and the hydraulic systems for the front and the rear wheels are constituted so that $(S1/\lambda1)$ x (a1/A1) = $(S2\lambda 2)$ x (a2/A2) . Therefore, it is possible to prevent the working oil from flowing through the first and the second throttles 38 and 39 when the displacement directions and displacement amounts of the front and the rear wheels 36 and 37 are approximately the same, even in the case the cross-sectional areas a1 and a2 of the piston rods 14 and 14 of the hydraulic cylinders 2 and 4 for the front and the rear wheels are different from each other, or in the case the ratios of the piston strokes S1 and S2 of the hydraulic cylinders 2 and 4 to the displacement amounts $\lambda1$ and $\lambda2$ of the front and the rear wheels are mutually different. Therefore, it is possible to constitute the suspension systems 31 and 32 for the front and the rear wheels to adapt to the weight distribution while retaining the function of relatively increasing or decreasing the damping forces according to the behavior of the vehicle body.

The suspension systems 31 and 32, and the hydraulic systems for the front and the rear wheels are also constituted so that $(S1/\lambda1)$ x (a1/A1) x $\Delta \Phi$ = $-(S2/\lambda2)$ x (a2/A2) x $\Delta \Phi'$ when the front and the rear wheels 36 and 37 displace in opposite directions relative to the vehicle body and the absolute values of the displacement speeds are the same. Therefore, it is possible to prevent the damping characteristics of the throttles from changing depending on the working oil flow directions even in at least one of the cases of; the cross-sectional areas a1 and a2 of the piston rods 14 of the hydraulic cylinders 2 and 4 being mutually different, the lever ratios of the suspension systems 31 and 32 for the front and the rear wheels being mutually different, and the effective cross-sectional areas A1 and A2 of the first and the second pressure regulating cylinders 16 and 18 being mutually different.

(Second Embodiment)

Unless the damping force produced with the throttle changes in proportion to the inertia mass of the vehicle body, the oscillation damping effect for the vehicle body decreases undesirably. Therefore, the suspension systems must be constituted also in consideration of the static ground contact loads of the front and the rear wheels 36 and 37. An example of constituting the suspension system in consideration of the static ground contact load of the wheel will be described below. In the following description, the static ground contact load of the front wheel 36 is denoted with W1 and that of the rear wheel 37 with W2. Since the constitution of the suspension system of this embodiment is the same as that of the first embodiment, the following description is made in reference to FIGs. 1 and 2.

Unless the damping forces produced with the first and the second throttles 38 and 39 are approximately the same on the basis of per unit inertia mass expected during rapid deceleration and rapid acceleration, the oscillation of the vehicle body cannot be controlled appropriately. The appropriate control can be realized by constituting the suspension systems and the hydraulic system (including the first and the second throttles 38 and 39) to satisfy the conditions of the following equation (2)' when the vehicle body pitches with the front and the rear wheels 36 and 37 moving in mutually opposite directions with the absolute values of the moving speeds of the wheels being mutually the same (with $d\lambda1/dt = -d\lambda2/dt$).

$$(S1/\lambda 1) \times (a1/A1) \times \Delta \Phi /W1 = (S2/\lambda 2) \times (a2/A2) \times \Delta \Phi'/W2 \qquad (2)'$$

In the equation (2)', $\Delta \Phi$ denotes the differential pressure (P1 - P2) between the oil chambers 15 and 17 when the working oil flows from the first pressure regulating cylinder 16 to the second pressure regulating cylinder 18, and $\Delta \Phi'$ denotes the differential pressure (P1 - P2) between the oil chambers 15 and 17 when the working oil flows from the second pressure regulating cylinder 18 to the first pressure regulating cylinder 16.

The above equation (2)' is derived by; obtaining a first condition under which the damping force produced through the first throttle 38 during rapid deceleration is equal to the damping force produced through the second throttle 39 during rapid acceleration, obtaining a second condition under which the damping force produced through the second throttle 39 during rapid deceleration is equal to the damping force produced through the first throttle 38 during rapid acceleration, and arranging that the two condition are simultaneously satisfied. The process of deriving the equation (2)' is described below.

When deriving the equation (2)', it is assumed that the vertical displacement speeds of the wheels at the ground contact points are the same in absolute value and opposite in direction (with $d \lambda 1/dt = - d \lambda 2/dt$).

(a) When it is assumed that F1 is the damping force produced through the first throttle 38 and F2 is the damping force produced through the second throttle 39 in the case the front wheel 36 moves up relative to the vehicle body and the rear wheel 37 moves down relative to the vehicle body as during a rapid deceleration, namely in the case $\lambda 1/dt > 0$, $\lambda 2/dt < 0$, the damping force F1 can be expressed with the equation ① below, the damping force F2 can be expressed with the equation ② below, the differential pressure through the pressure regulator 6 can be expressed with the equation ③ , and the oil pressure working on the free piston 20 of the pressure regulator 6 can be expressed with the equation ④ .

$$F1(\lambda 1/dt > 0, \lambda 2/dt < 0) = a1 \times (P1 - P0) \times S1/\lambda 1 \qquad ①$$

$$F2(\lambda 1/dt > 0, \lambda 2/dt < 0) = a2 \times (P2 - P0) \times S2/\lambda 2 \qquad ②$$

$$P1 - P2 = \Delta P \qquad ③$$

$$P1 \times A1 + P2 \times A2 = P0 \times (A1 + A2) \qquad ④$$

From the above equations ① , ② , and ④ ,

$$F1(\lambda 1/dt > 0, \lambda 2/dt < 0) = a1 \times \Delta P \times A2 \times (S1/\lambda 1)/(A1 + A2) \qquad ⑤$$

From the above equations ② , ③ , and ④ ,

$$F2(\lambda 1/dt > 0, \lambda 2/dt < 0) = -a2 \times \Delta P \times A1 \times (S2/\lambda 2) / (A1 + A2) \qquad ⑥$$

(b) When it is assumed that F1' is the damping force produced through the first throttle 38 and F2' is the damping force produced through the second throttle 39 in the case the front wheel 36 moves up relative to the vehicle body and the rear wheel 37 moves down relative to the vehicle body as during a rapid acceleration, namely in the case $\lambda 1/dt < 0$, $\lambda 2/dt > 0$, the damping force F1' can be expressed with the equation ①' below, the damping force F2' can be expressed with the equation ②' below, the differential pressure through the pressure regulator 6 can be expressed with the equation ③', and the oil pressure working on the free piston 20 of the pressure regulator 6 can be expressed with the equation ④'.

$$F1'(\lambda 1/dt < 0, \lambda 2/dt > 0) = a1 \times (P1' - P0) \times S1/\lambda 1 \qquad ①'$$

$$F2'(\lambda1/dt < 0, \lambda2/dt > 0) = a2 \times (P2' - P0) \times S2/\lambda2 \qquad ②'$$

$$P1' - P2' = \Delta P' \qquad ③'$$

$$P1' \times A1 + P2' \times A2 = P0 \times (A1 + A2) \qquad ④'$$

From the above equations ①', ②', and ④',

$$F1'(\lambda1/dt < 0, \lambda2/dt > 0) = a1 \times \Delta P' \times A2 \times (S1/\lambda1)/(A1 + A2) \qquad ⑤'$$

From the above equations ②', ③', and ④',

$$F2'(\lambda1/dt < 0, \lambda2/dt > 0) = -a2 \times \Delta P' \times A1 \times (S2/\lambda2)/(A1 + A2) \qquad ⑥'$$

The unit inertia mass at the damper of each suspension system is the static ground contact load W1 or W2 multiplied by a certain constant Since the constant is the same at all the dampers, it is neglected for convenience' sake in the following discussion. Therefore, the damping force per unit inertia mass produced through the first throttle 38 during rapid deceleration is assumed to be F1/W1, and the damping force per unit inertia mass produced through the second throttle 39 during rapid acceleration is assumed to be F2'/W2. The afore-mentioned first condition (under which the damping force per unit inertia mass F1/W1 produced through the first throttle 38 during rapid deceleration is equal to the damping force per unit inertia mass F2'/W2 produced through the second throttle 39 during rapid acceleration) can be obtained from the above-described relation ⑤ = ⑥'. Namely,
since , F1/W1($\lambda$1/dt > 0, $\lambda$2/dt < 0) = F2'/W2($\lambda$1/dt < 0, $\lambda$2/dt > 0), it can be expressed with the following equation ⑦ :

$$(a1/A1) \times (S1/\lambda1) \times \Delta P/W1 = -(a2/A2) \times (S2/\lambda2) \times \Delta P'/W2 \quad ⑦$$

The second condition under which the damping force per unit inertia mass F2/W2 produced through the second throttle 39 during rapid deceleration is equal to the damping force per unit inertia mass F1'/W1 produced through the first throttle 38 during rapid deceleration can be obtained from the above-described relation ⑥ = ⑤'. Namely,
since F2/W1($\lambda$1/dt > 0, $\lambda$2/dt < 0) = F1'/W1($\lambda$1/dt < 0, $\lambda$2/dt > 0), it can be expressed with the following equation ⑧ :

$$(a1/A1) \times (S1/\lambda1) \times \Delta P'/W1 = -(a2/A2) \times (S2/\lambda2) \times \Delta P/W2 \qquad ⑧$$

Since the difference between the equations ⑦ and ⑧ is between $\Delta P$ and $\Delta P'$, which are the differential pressures between the pressure P1 in the first pressure regulating cylinder and the pressure P2 in the second pressure regulating cylinder, $\Delta P$ and $\Delta P'$, or $\Delta P'$ and $\Delta P$, may be replaced with $\Delta \Phi$ and $\Delta \Phi'$ for convenience' sake. In this way, the above equation (2)' is obtained.

The damping force characteristics of the first and the second throttles 38 and 39 are obtained with the same procedure as that used in the first embodiment. Therefore, the description on the procedure for obtaining the damping force characteristics of the first and the second throttles 38 and 39 is omitted here.

In this embodiment, the suspension systems 31 and 32, and the hydraulic systems for the front and the rear wheels are constituted so that (S1/$\lambda$1) x (a1/A1) x $\Delta \Phi$/W1 = - (S2/$\lambda$2) x (a2/A2) x $\Delta \Phi'$/W2 when the front and the rear wheels 36 and 37 displace in opposite directions relative to the vehicle body and the absolute values of the displacement speeds are the same. Therefore, it is possible to prevent the damping characteristics of the throttles from changing depending on the working oil flow directions even in at least one of the cases of; the cross-sectional areas a1 and a2 of the piston rods 14 of the hydraulic cylinders 2 and 4 being mutually different, the static ground contact loads W1 and W2 being mutually different, the lever ratios of the suspension systems 31 and 32 for the front and the rear wheels being mutually different, and the effective cross-sectional areas A1 and A2 of the first and the second pressure regulating cylinders 16 and 18 being mutually different.

(Third Embodiment)

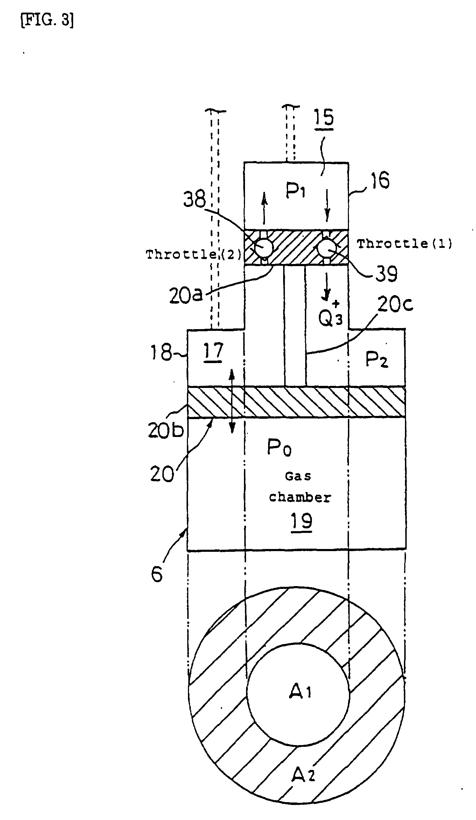

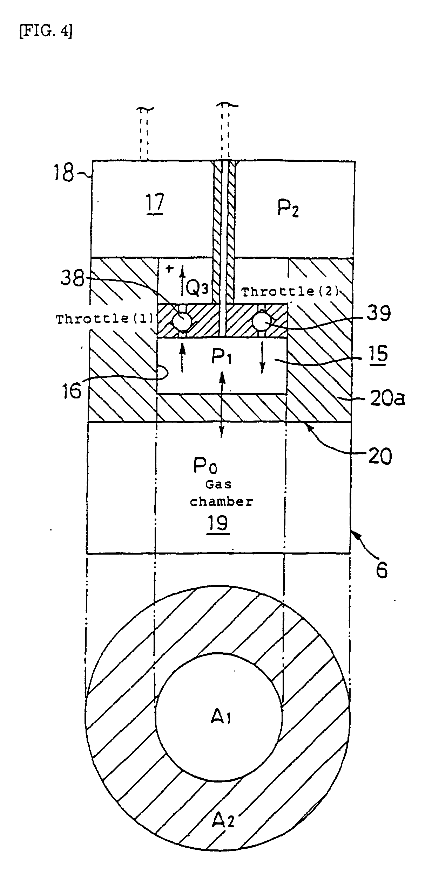

The pressure regulator may be constituted as shown in FIG. 3 or 4.

FIGs. 3 and 4 show other example constitutions of the pressure regulator. In these figures, the same or like components as those described in reference to FIGs. 1 and 5 are provided with the same symbols and their detailed descriptions are omitted.

The pressure regulator 6 shown in FIG. 3 comprises the first pressure regulating cylinder 16 and the second pressure regulating cylinder 18 positioned on the same axial line. The pistons 20a and 20b of the free piston 20 are also positioned on the same axial line and interconnected through the connecting rod 20c. The piston 20a of the first pressure regulating cylinder 16 is provided with the first and the second throttles 38 and 39. The pressure regulator 6 shown in FIG. 4 is constituted with the first pressure regulating cylinder 16 disposed within the piston 20a of the second pressure regulating cylinder 18, and the wall-forming portion of the first pressure regulating cylinder 16 is provided with the first and the second throttles 38 and 39.

Also with the constitution of the pressure regulator 6 shown in FIG. 3 or 4, the same effect as with the first or the second embodiment is provided.

When one of the above-described first to third embodiments is employed, the hydraulic cylinders 2 and 4 for the front and the rear wheels may be formed separately from the hydraulic damper so that these cylinders are connected for interlocked motion with the hydraulic damper. The hydraulic cylinders 2 and 4 for the front and the rear wheels may also be formed so that the throttle 13 in the piston part 9 is unnecessary. That is, only one oil chamber is formed in the cylinder body 8, and the oil chamber is connected to the pressure regulator 6. When this constitution is employed, the effective cross-sectional areas a1 and a2 of the pistons are the cross-sectional area of the piston part 9.

Still another possible constitution of the pressure regulator 6 is that the high pressure gas chamber 19 of the first and the second pressure regulating cylinders 16 and 18 is filled with working oil, and the high pressure gas chamber 19 is connected to an oil chamber of another cylinder. The another cylinder is constituted that its interior is defined with a free piston into an oil chamber and a high pressure gas chamber, and the oil chamber is connected to the high pressure gas chamber 19 of the pressure regulator 6 filled with working oil.

Moreover, when the cross-sectional area a1 of the piston rod 14 of the front wheel hydraulic cylinder 2 is nearly the same as that of the piston rod 14 of the rear wheel hydraulic cylinder 4, the same effect as with the above embodiments is obtained by determining the lever ratios of the suspension systems and the effective cross-sectional areas A1 and A2 of the pressure regulating cylinders 16 and 18 of the pressure regulator 6 so as to satisfy the following equation (5).

$$(S1/\lambda 1)/A1 = (S2/\lambda 2) / A2 \tag{5}$$

In a similar manner to the above, in the case the lever ratio $(S1/\lambda 1)$ of the front wheel suspension system 31 is nearly the same as that $(S2/\lambda 2)$ of the rear wheel suspension system 32, the same effect as with the above embodiments is obtained by determining the cross-sectional areas a1 and a2 of the piston rods 14 and the effective cross-sectional areas A1 and A2 of the pressure regulating cylinders 16 and 18 of the pressure regulator 6 so as to satisfy the following equation (6).

$$a1/A1 = a2/A2 \tag{6}$$

According to the embodiments described above, it is possible to prevent the working oil from flowing through the throttle when both of the front and the rear wheels move in the same direction by a nearly the same travel while constituting one wheel suspension system including the first hydraulic cylinder and the first pressure regulating cylinder differently from the other wheel suspension system including the second hydraulic cylinder and the second pressure regulating cylinder. This makes it possible to increase the degree of freedom in designing the suspension systems. Therefore, application of this invention to the front wheel and the rear wheel suspension systems makes it possible to constitute the front wheel and the rear wheel suspension systems respectively compatible with for example vehicle weight distribution while retaining the function of relatively increasing and decreasing damping forces according to the behavior of the vehicle body.

A vehicle suspension system is preferably provided with the first oil chamber and the second oil chamber being interconnected by a hydraulic route comprising throttles, and the first and the second hydraulic cylinders, the first and the second pressure regulating cylinders (16,18), and throttles are constituted to satisfy an equation: $(S1/\lambda 1) \times (a1/A1) \times \Delta\Phi = (S2/\lambda 2) \times (a2/A2) \times \Delta\Phi'$ wherein $\Delta\Phi$ denotes a differential pressure when working oil flows from the first oil chamber to the second oil chamber, and $\Delta\Phi'$ denotes a differential pressure when working oil flows from the second oil chamber to the first oil chamber.

In said vehicle suspension system the respective paired values of a1 and a2, S1/$\lambda$1 and S2/$\lambda$2, or the damping characteristics when the working oil flows from the hydraulic route of the first hydraulic cylinder through the throttle (38) to the hydraulic route of the second hydraulic cylinder, and the damping characteristics when the working oil flows from the hydraulic route of the second hydraulic cylinder through the throttle to the hydraulic route of the first hydraulic cylinder, at least one pair of values are set to mutually different values.

With regard thereto, the damping characteristic of the throttle can be prevented from changing depending on the working oil flow direction while constituting one wheel suspension system including the first hydraulic cylinder and the first pressure regulating cylinder differently from the other wheel suspension system including the second hydraulic cylinder and the second pressure regulating cylinder. Therefore, application of this invention to the front wheel and the rear wheel suspension systems makes it possible to increase the degree of freedom of designing the throttle in addition to making it possible to constitute the front wheel and the rear wheel suspension systems respectively compatible with for example vehicle weight distribution while retaining the function of relatively increasing and decreasing damping forces according to the behavior of the vehicle body.

A vehicle suspension system is preferably provided with the first and the second hydraulic cylinders (2,4), the first and the second pressure regulating cylinders (16,18), and throttles are constituted to satisfy an equation:

$$(S1/\lambda1) \times (a1/A1) \times \Delta\Phi/W1 = (S2/\lambda2) \times (a2/A2) \times \Delta\Phi'/W2$$

W1 and W2 denote static ground contact loads of the wheels on the first and the second hydraulic cylinder sides.

In said vehicle suspension system the respective paired values of; a1 and a2, W1 and W2, S1/$\lambda$1 and S2/$\lambda$12, or the damping characteristics when the working oil flows from the hydraulic route of the first hydraulic cylinder (2) through the throttle (38) to the hydraulic route of the second hydraulic cylinder (4), and the damping characteristics when the working oil flows from the hydraulic route of the second hydraulic cylinder (4) through the throttle (39) to the hydraulic route of the first hydraulic cylinder (2), at least one pair of values are set to mutually different values.

With regard thereto, the damping characteristic of the throttle can be prevented from changing depending on the working oil flow direction even in one of the cases of; the cross-sectional areas a1 and a2 of the piston rods of the first and the second hydraulic cylinders being mutually different, the static ground contact loads W1 and W2 of the wheels on the first and the second hydraulic cylinder sides being mutually different, the lever ratios S1/$\lambda$1 and S2/$\lambda$2 being mutually different, and the effective cross-sectional areas A1 and A2 of the first and the second pressure regulating cylinders being mutually different. Therefore, application of this invention to the front wheel and the rear wheel suspension systems makes it possible to increase the degree of freedom of designing the throttle in addition to making it possible to constitute the front wheel and the rear wheel suspension systems respectively compatible with for example vehicle weight distribution while retaining the function of relatively increasing and decreasing damping forces according to the behavior of the vehicle body.

The above mentioned equations can be adapted to the conditions in that the lever ratio (S1/$\lambda$1) of the front wheel suspension system 31 is nearly the same as that (S2/$\lambda$2) of the rear wheel suspension system 32 or in that the cross-sectional area a1 of the piston rod 14 of the front wheel hydraulic cylinder 2 is nearly the same as that of the piston rod 14 of the rear wheel hydraulic cylinder 4 as known from the respective specific embodiments.

Regarding the embodiments it is enabled to constitute of a front wheel suspension system and a rear wheel suspension system of respectively different specifications while retaining the function of relatively increasing and decreasing damping forces according to the behavior of a vehicle. The suspension systems 31, 32 comprising hydraulic cylinders 2, 4 for front and rear wheels; and a first and a second pressure regulating cylinders 16, 18 are constituted to satisfy the equation $(S1/\lambda1) \times (a1/A1) = (S2/\lambda2) \times (a2/A2)$, where, S1 and S2 denote piston travels of the hydraulic cylinders 2 and 4, a1 and a2 denote effective cross-sectional areas of piston rods 14 of the hydraulic cylinders 2 and 4, $\lambda$1 and $\lambda$2 denote vertical displacement amounts at ground contact points of wheels caused by the piston travels S1 and S2 of the hydraulic cylinders 2 and 4, and A1 and A2 denote effective cross-sectional areas of the first and the second pressure regulating cylinders 16, 18.

## Claims

1. A vehicle suspension system comprising:

   a first and a second hydraulic cylinders (2,4), arranged on a vehicle body, in each hydraulic cylinder (2,4) a piston (100,200) that is free reciprocal moveable inserted, each hydraulic cylinder (2,4) is connected to one of wheel side and vehicle body side, and each piston (100,200) is connected to the other of wheel side and vehicle body side;

a first pressure regulating cylinder (16) having a first oil chamber (15) connected through a first hydraulic passage to the first hydraulic cylinder (2) and a movable first partition wall (20a) for changing a volume of the first oil chamber, and

a second pressure regulating cylinder (18) having a second oil chamber (17) connected through a second hydraulic passage to the second hydraulic cylinder (4) and a movable second partition wall (20b) for changing a volume of the second oil chamber (17), the first and second partition walls (20a,20b) of the first and second pressure regulating cylinders (16,18) being interconnected for interlocked movement, **characterized in that**, the first hydraulic cylinder (2) and the second hydraulic cylinder (4) are connected by a hydraulic route,

the first and the second hydraulic cylinders (2,4), and the first and the second pressure regulating cylinders (16,18) are constituted to satisfy an equation: $(S1/\lambda1) \times (a1/A1) = (S2/\lambda2) \times (a2/A2)$, wherein

S1 and S2 denote piston travels of the first and the second hydraulic cylinders (2,4),

a1 and a2 denote effective cross-sectional areas of the pistons (100,200) of the first and the second hydraulic cylinders (2,4),

$\lambda1$ and $\lambda2$ denote vertical displacement amounts at ground contact points of wheels caused by the piston travels S1 and S2 of the first and the second hydraulic cylinders (2,4), and

A1 and A2 denote effective cross-sectional areas of the first and the second pressure regulating cylinders (16,18).

2. A vehicle suspension system according to claim 1, **characterized in that** the values of a1, a2, S1, S2, $\lambda1$, and $\lambda2$ being set to satisfy the conditions $a1 \neq a2$ and $S1/\lambda1 \neq S2/\lambda2$.

3. A vehicle suspension system according to claim 1, **characterized in that** the values of a1, a2, S1, S2, $\lambda1$, and $\lambda2$ being set to satisfy the conditions $a1 = a2$ and $S1/\lambda1 \neq S2/\lambda2$ so that the first and the second pressure regulating cylinders (16,18) are constituted to satisfy an equation:

$$(S1/\lambda1)/A1 = (S2/\lambda2)/A2,$$

4. A vehicle suspension system according to claim 1, **characterized in that** the values of a1, a2, S1, S2, $\lambda1$, and $\lambda2$ being set to satisfy the conditions $a1 \neq a2$ and $S1/\lambda1 = S2/\lambda2$ so that the first and the second hydraulic cylinders (2,4), and the first and the second pressure regulating cylinders (16,18) are constituted to satisfy an equation: $(a1/A1) = (a2/A2)$.

5. A vehicle suspension system according to one of the claims 1 to 4 **characterized in that** the first oil chamber (15) and the second oil chamber (17) are interconnected by a hydraulic route comprising throttles (38,39), and the first and the second hydraulic cylinders (2,4), the first and the second pressure regulating cylinders (16,18), and throttles are constituted to satisfy an equation:

$$(S1/\lambda1) \times (a1/A1) \times \Delta\Phi = (S2/\lambda2) \times (a2/A2) \times \Delta\Phi'$$

wherein

$\Delta\Phi$ denotes a differential pressure when working oil flows from the first oil chamber (15) to the second oil chamber (17), and

$\Delta\Phi'$ denotes a differential pressure when working oil flows from the second oil chamber (17) to the first oil chamber (15).

6. A vehicle suspension system according to claim 5 **characterized in that** the respective paired values of a1 and a2, $S1/\lambda1$ and $S2/\lambda2$, or the damping characteristics when the working oil flows from the hydraulic route of the first hydraulic cylinder (2) through the throttle (38) to the hydraulic route of the second hydraulic cylinder (4), and the damping characteristics when the working oil flows from the hydraulic route of the second hydraulic cylinder (4) through the throttle (39) to the hydraulic route of the first hydraulic cylinder (2), at least one pair of values are set to mutually different values.

7. A vehicle suspension system according to claim 5 or 6, **characterized in that** the first and the second hydraulic cylinders (2,4), the first and the second pressure regulating cylinders (16,18), and throttles are constituted to satisfy

an equation:

$$(S1/\lambda1) \times (a1/A1) \times \Delta\Phi /W1 = (S2/\lambda2) \times (a2/A2) \times \Delta \Phi'/W2$$

W1 and W2 denote static ground contact loads of the wheels on the first and the second hydraulic cylinder sides.

**8.** A vehicle suspension system according to claim 7, **characterized in that** the respective paired values of; a1 and a2, W1 and W2, S1/λ1 and S2/λ12, or the damping characteristics when the working oil flows from the hydraulic route of the first hydraulic cylinder (2) through the throttle (38) to the hydraulic route of the second hydraulic cylinder (4), and the damping characteristics when the working oil flows from the hydraulic route of the second hydraulic cylinder (4) through the throttle (39) to the hydraulic route of the first hydraulic cylinder (2), at least one pair of values are set to mutually different values.

**Revendications**

**1.** Système de suspension de véhicule comprenant :

un premier et un second vérins hydrauliques (2, 4) agencés sur un corps de véhicule, dans chaque vérin hydraulique (2, 4) un piston (100, 200) qui est inséré pour être librement mobile en va et vient, chaque vérin hydraulique (2, 4) étant raccordé à l'un parmi le côté de roue et le côté de corps de véhicule, et chaque piston (100, 200) étant raccordé à l'autre parmi le côté de roue et le côté de corps de véhicule ;
un premier cylindre de régulation de pression (16) ayant une première chambre d'huile (15) raccordée par le biais d'un premier passage hydraulique au premier vérin hydraulique (2) et une première paroi de séparation mobile (20a) destinée à modifier un volume de la première chambre d'huile, et
un second cylindre de régulation de pression (18) ayant une seconde chambre d'huile (17) raccordée par le biais d'un second passage hydraulique au second vérin hydraulique (4) et une seconde paroi de séparation mobile (20b) destinée à modifier un volume de la seconde chambre d'huile (17), les première et seconde parois de séparation (20a, 20b) des premier et second cylindres de régulation de pression (16, 18) étant interconnectées pour un mouvement réciproquement verrouillé, **caractérisé en ce que** le premier vérin hydraulique (2) et le second vérin hydraulique (4) sont raccordés par un chemin hydraulique, les premier et second vérins hydrauliques (2, 4) et les premier et second cylindres de régulation de pression (16, 18) sont constitués de manière à satisfaire une équation :

$$(S1/\lambda1) \times (a1/A1) = (S2/\lambda2) \times (a2/A2),$$

dans laquelle
S1 et S2 désignent les courses de piston des premier et second vérins hydrauliques (2, 4),
a1 et a2 désignent des zones transversales effectives des pistons (100, 200) des premier et second vérins hydrauliques (2, 4),
λ1 et λ2 désignent des quantités de déplacement vertical au niveau des points de contact au sol des roues, provoquées par les courses de piston S1 et S2 des premier et second vérins hydrauliques (2, 4), et
A1 et A2 désignent des zones transversales effectives des premier et second cylindres de régulation de pression (16, 18).

**2.** Système de suspension de véhicule selon la revendication 1, **caractérisé en ce que** les valeurs de a1, a2, S1, S2, λ1 et λ2 sont déterminées de manière à satisfaire les conditions a1 ≠ a2 et S1/λ1 ≠ S2/λ2.

**3.** Système de suspension de véhicule selon la revendication 1, **caractérisé en ce que** les valeurs de a1, a2, S1, S2, λ1 et λ2 sont déterminées de manière à satisfaire les conditions a1 = a2 et S1/λ1 ≠ S2/λ2, de sorte que les premier et second cylindres de régulation de pression (16, 18) sont constitués de manière à satisfaire une équation : (S1/λ1)/A1 = (S2/λ2)/A2.

**4.** Système de suspension de véhicule selon la revendication 1, **caractérisé en ce que** les valeurs de a1, a2, S1, S2, λ1 et λ2 sont déterminées de manière à satisfaire les conditions a1 ≠ a2 et S1/λ1 = S2/λ2, de sorte que les premier et second vérins hydrauliques (2, 4), et les premier et second cylindres de régulation de pression (16, 18) sont constitués de manière à satisfaire une équation : (a1/A1) = (a2/A2).

5. Système de suspension de véhicule selon l'une des revendications 1 à 4 **caractérisé en ce que** la première chambre d'huile (15) et la seconde chambre d'huile (17) sont interconnectées par un chemin hydraulique comprenant des organes d'étranglement (38, 39), et les premier et second vérins hydrauliques (2, 4), les premier et second cylindres de régulation de pression (16, 18) et les organes d'étranglement sont constitués de manière à satisfaire une équation :

$$(S1/\lambda 1) \times (a1/A1) \times \rho\Phi = (S2/\lambda 2) \times (a2/A2) \times \rho\Phi'$$

où

$\rho\Phi$ désigne une pression différentielle lorsque l'huile d'exploitation s'écoule de la première chambre d'huile (15) vers la seconde chambre d'huile (17), et

$\rho\Phi'$ désigne une pression différentielle lorsque l'huile d'exploitation s'écoule de la seconde chambre d'huile (17) vers la première chambre d'huile (15).

6. Système de suspension de véhicule selon la revendication 5, **caractérisé en ce que** les valeurs par paire respectives de a1 et a2, $S1/\lambda 1$ et $S2/\lambda 2$, ou les caractéristiques d'amortissement lorsque l'huile d'exploitation s'écoule du chemin hydraulique du premier vérin hydraulique (2) en passant par l'organe d'étranglement (38) vers le chemin hydraulique du second vérin hydraulique (4), et les caractéristiques d'amortissement lorsque l'huile d'exploitation s'écoule du chemin hydraulique du second vérin hydraulique (4) en passant par l'organe d'étranglement (39) vers le chemin hydraulique du premier vérin hydraulique (2), au moins une paire de valeurs est déterminée pour des valeurs mutuellement différentes.

7. Système de suspension de véhicule selon la revendication 5 ou 6, **caractérisé en ce que** les premier et second vérins hydrauliques (2, 4), les premier et second cylindres de régulation de pression (16, 18), et les organes d'étranglement sont constitués de manière à satisfaire une équation :

$$(S1/\lambda 1) \times (a1/A1) \times \rho\Phi \, /W1 = (S2/\lambda 2) \times (a2/A2) \times \rho\Phi'/W2$$

W1 et W2 désignent des charges statiques de contact au sol des roues sur les premier et second côtés du vérin hydraulique.

8. Système de suspension de véhicule selon la revendication 7, **caractérisé en ce que** les valeurs par paire de a1 et a2, W1 et W2, $S1/\lambda 1$ et $S2/\lambda 2$, ou les caractéristiques d'amortissement lorsque l'huile d'exploitation s'écoule du chemin hydraulique du premier vérin hydraulique (2) en passant par l'organe d'étranglement (38) vers le chemin hydraulique du second vérin hydraulique (4), et les caractéristiques d'amortissement lorsque l'huile d'exploitation s'écoule du chemin hydraulique du second vérin hydraulique (4) en passant par l'organe d'étranglement (39) vers le chemin hydraulique du premier vérin hydraulique (2), au moins une paire de valeurs est déterminée pour des valeurs mutuellement différentes.

**Patentansprüche**

1. Fahrzeugaufhängungssystem, das aufweist:

einen ersten und einen zweiten Zylinder (2, 4), angeordnet an einer Fahrzeugkarosserie, in jedem Hydraulikzylinder (2, 4) einen Kolben (100, 200), der frei hinund hergehend eingesetzt ist, wobei jeder Hydraulikzylinder (2, 4) entweder mit einer Radseite oder der Fahrzeugkarosserieseite verbunden ist, und jeder Kolben (100, 200) mit der anderen von Radseite und Fahrzeugkarosserieseite verbunden ist;
einen ersten Druckregulierungszylinder (16), der eine erste Ölkammer (15) hat, verbunden durch einen ersten Hydraulikkanal mit dem ersten Hydraulikzylinder (2) und einer bewegbaren ersten Trennwand (20a) zum Verändern des Volumens der ersten Ölkammer, und
einen zweiten Druckregulierungszylinder (18), der eine zweite Ölkammer (17) hat, verbunden durch einen zweiten Hydraulikkanal mit dem zweiten Hydraulikzylinder (4) und eine bewegbare zweite Trennwand (20b) zum Verändern des Volumens der zweiten Ölkammer (17), wobei die ersten und zweiten Druckregulierungszylinder (16, 18) zur verriegelten Bewegung verbunden sind

**dadurch gekennzeichnet, dass**
der erste Hydraulikzylinder (2) und der zweite Hydraulikzylinder (4) durch eine hydraulische Leitungsführung verbunden sind, der erste und der zweite Hydraulikzylinder (2, 4), und der erste und der zweite Druckregulierungszylinder (16, 18) gebildet sind, um einer Gleichung zu genügen: $(S1/\lambda1) \times (a1/A1) = (S2/\lambda2) \times (a2/A2)$, wobei S1 und S2 Kolbenwege des ersten und zweiten Hydraulikzylinder (2, 4) bezeichnen,
a1 und a2 effektive Querschnittsflächen des Kolbens (100, 200) des ersten und den zweiten Hydraulikzylinders (2, 4) bezeichnen,
$\lambda1$ und $\lambda2$ vertikale Verlagerungsbeträge an Rad- Boden- Kontaktpunkten, verursacht durch die Kolbenwege S1 und S2 des ersten und zweiten Hydraulikzylinders (2, 4), bezeichnen und
A1 und A2 effektive Querschnittsflächen des ersten und zweiten Druckregulierungszylinders (16, 18) bezeichnen.

2. Fahrzeugaufhängungssystem nach Anspruch 1, **dadurch gekennzeichnet dass** die Werte von a1, a2, S1, S2, $\lambda1$ und $\lambda2$ festgelegt werden, um den Bedingungen $a1 \neq a2$ und $S1/\lambda1 \neq S2/\lambda2$ zu genügen.

3. Fahrzeugaufhängungssystem nach Anspruch 1, **dadurch gekennzeichnet dass** die Werte von a1, a2, S1, S2, $\lambda1$ und $\lambda2$ festgelegt werden, um den Bedingungen $a1 = a2$ und $S1/\lambda1 = S2/\lambda2$ zu genügen, so dass der erste und der zweite Druckregulierungszylinder (16, 18) ausgelegt sind, um einer Gleichung zu genügen: $(S1/\lambda1)/A1 = (S2/\lambda2)/A2$.

4. Fahrzeugaufhängungssystem nach Anspruch 1, **dadurch gekennzeichnet dass** die Werte von a1, a2, S1, S2, $\lambda1$ und $\lambda2$ festgelegt werden; den Bedingungen $a1 \neq a2$ und $S1/\lambda1 = S2/\lambda2$ zu genügen, so dass der erste und zweite Hydraulikzylinder (2, 4) und der erste und zweite Druckregulierungszylinder (16, 18) ausgelegt sind, um einer Gleichung zu genügen: $(a1/A1) = (a2/A2)$.

5. Fahrzeugaufhängungssystem nach einem der Ansprüche 1 bis 4, **dadurch gekennzeichnet dass** die erste Ölkammer (15) und die zweite Ölkammer (17) durch eine hydraulische Leitungsführung mit Drosseln (38, 39) verbunden sind, und der erste und der zweite Hydraulikzylinder (2, 4), der erste und zweite Druckregulierungszylinder (16, 18) und die Drosseln ausgelegt sind, um einer Gleichung zu genügen:

$$(S1/\lambda1) \times (a1/A1) \times \Delta\Phi = (S2/\lambda2) \times (a2/A2) \times \Delta\Phi'$$

wobei
$\Delta\Phi$ einen Differentialdruck bezeichnet, wenn Arbeitsfluid aus der ersten Ölkammer (15) zu der zweiten Ölkammer (17) strömt, und
$\Delta\Phi'$ einen Differentialdruck bezeichnet, wenn Arbeitsfluid aus der zweiten Ölkammer (17) in die erste Ölkammer (15) strömt.

6. Fahrzeugaufhängungssystem nach Anspruch 5, **dadurch gekennzeichnet dass** die jeweils paarweisen Werte von a1 und a2, S1/$\lambda1$ und S2/$\lambda2$, oder die Dämpfungscharakteristika, wenn das Arbeitsöl aus der hydraulischen Leitungsführung des ersten Hydraulikzylinder (2) durch die Drossel (38) zu der hydraulischen Leitungsführung des zweiten Hydraulikzylinders (4) strömt, und die Dämpfungscharakteristika, wenn das Arbeitsöl von der hydraulischen Leitungsführung des zweiten Hydraulikzylinders (4) durch die Drossel (39) zu der hydraulischen Leitungsführung des ersten Hydraulikzylinders (2) strömt, so ausgelegt sind, dass zumindest ein Wertepaar zueinander unterschiedliche Werte aufweist.

7. Fahrzeugaufhängungssystem nach Anspruch 5 oder 6, **dadurch gekennzeichnet dass** der erste und zweite Hydraulikzylinder (2, 4), der erste und der zweite Druckregulierungszylinder (16, 18) und die Drosseln ausgelegt sind, um einer Gleichung zu genügen:

$$(S1/\lambda1) \times (a1/A1) \times \Delta\phi/W1 = (S2/\lambda2) \times (a2/A2) \times \Delta\phi'/W2$$

wobei W1 und W2 statische Boden- Kontaktbelastungen der Räder auf der ersten und zweiten Seite der Hydraulikzylinder bezeichnen.

8. Fahrzeugaufhängungssystem nach Anspruch 7, **dadurch gekennzeichnet dass** die jeweils paarweisen Werte von a1 und a2, W1 und W2, S1/$\lambda$1 und S2/$\lambda$2 oder die Dämpfungscharakteristika, wenn das Arbeitsöl aus der hydraulischen Leitungsführung des ersten Hydraulikzylinder (2) durch die Drossel (38) zu der hydraulischen Leitungsführung des zweiten Hydraulikzylinders (4) strömt, und die Dämpfungscharakteristika, wenn das Arbeitsöl von der hydraulischen Leitungsführung des zweiten Hydraulikzylinders (4) durch die Drossel (39) zu der hydraulischen Leitungsführung des ersten Hydraulikzylinders (2) strömt, so festgelegt sind, dass zumindest ein Wertepaar zueinander unterschiedliche Werte aufweist.

[FIG. 1]

[FIG. 2]

[FIG. 3]

[FIG. 4]

[FIG. 5]